# EUROPEAN PATENT SPECIFICATION

(11) **EP 2 527 668 B1**
(45) Date of publication and mention of the grant of the patent: **29.06.2016**
(21) Application number: 12250098.6
(22) Date of filing: 19.04.2012
(51) Int. Cl.: A01K 97/10

(54) **Fish-bite detector connected to a buzz bar by way of an attachment device**
Mit einer Buzzbar durch eine Befestigungsvorrichtung verbundener Fischbissdetektor
Détecteur de touche pour la pêche connecté à un support de type "buzz bar" au moyen d'un dispositif de fixation

(30) Priority: 24.05.2011 GB 201108742
(43) Date of publication of application: 28.11.2012
(73) Proprietor: Fox International Group Limited, Hainault, Essex IG6 3UT (GB)
(72) Inventor: Collins, Mark John, Epping Essex CM16 4FF (GB)
(74) Representative: Crouch, David John

(56) References cited:
- EP-A1- 1 329 158
- GB-A- 1 144 465
- US-A- 5 041 004
- US-A- 5 761 844
- US-A1- 2003 218 112

## Description

The present invention relates to a combination of a fish-bite detector connected to a buzz bar by way of an attachment device which comprises a fixed part and a screw-threaded part.

A problem encountered with existing such constructions is that when a further screw-threaded part, which may for example be a screw-threaded shank fixedly secured to a fish-bite detector, is screwed into the screw-threaded part of the device, the point at which the screw-threaded shank is fully screwed into the device may not correspond to a desired relative positioning. Thus, in the case of a fish-bite detector being secured to a buzz bar, the point at which the screw-threaded shank of the detector is fully home might not correspond to a relative positioning such that the intended direction of a rod resting on the bite detector is at right angles to the buzz bar. The user then has to decide whether to accept a degree of misalignment or to over screw the screw-threaded shank which may damage the screw-threaded part of the device, or to loosen the screw-threaded shank to achieve alignment but suffer a degree of looseness and wobble in the detector, or a compromise between alignment and over/under tightening.

The present invention seeks to provide a remedy.

GB 1144465A discloses a nut for preventing overtightening comprising a base portion and a cylindrical portion, the base portion having axially extending teeth and a rotary member mounted rotatably on the cylindrical portion and having axially directed teeth held in engagement with teeth by spring means. The teeth are of sawtooth profile so that the rotary member drives the base portion in one direction but only drives the base portion in the opposite direction until the torque required to drive the base portion is sufficient to cause the teeth of the rotary member to ride over the teeth of the base portion against the action of a spring washer. The washer is either held on the cylindrical portion by turning over the end of this portion or by means of a further nut screwed on to the cylindrical portion.

US 5041004A discloses electrical apparatus comprising a housing, a conducting member rotatably supported by the housing and adapted to provide a current path and to threadedly engage another electrical apparatus, and a clutch for transmitting a limited amount of torque from the housing to the conducting member.

US 5761844A discloses a fishing rod holder having a base, a fishing rod holding tube pivotally mounted on the base, a one-way movable connection located between the base and the fishing rod holding tube for holding the fishing rod holding tube against movement to a more horizontal position while permitting the fishing rod holding tube to be swung to a more upright position by merely manually grasping the holding tube and pivoting it on its base, a disengagement member for disengaging the one-way movable connection to permit the fishing rod holding tube to be swung manually to a more horizontal position, with the one-way movable connection consisting of engaged serrated discs having relatively small serrations to permit the holding tube to be oriented at a plurality of relatively small angular positions between its horizontal and vertical limits of movement.

Document EP1329158 A1 discloses a combination of a fish-bite detector connected to a buzz bar according to the preamble of independent claim 1.

Accordingly, the present invention is directed to a combination as set out in the opening paragraph of the present specification, **characterised in that** the screw-threaded part can rotate relative to the fixed part in a given sense against the frictional force exerted by at least one slipping clutch member interposed between those parts, the device further being provided with a one-way bearing which inhibits rotation of the screw-threaded part relative to the fixed part in the opposite sense.

It will be appreciated here that the screw-threaded part of this device interengages a screw-threaded part of an article, for example a fish-bite detector, to be attached to the attachment device. Whilst the article is being attached to the attachment device by the interengaging screw-threaded parts, initially the friction of the slipping clutch is sufficient to hold the screw-threaded part of the attachment device in a fixed position relative to the fixed part of the attachment device. However, once the engagement is complete, and no further travel is readily available between the two screw-threaded parts, the screw-threaded part of the attachment device can now rotate relative to the fixed part thereof under the action of the slipping clutch until the said article is oriented in the desired manner. The force applied by the slipping clutch is strong enough to retain the said article in the desired orientation when in use, but is not so great that it cannot be overcome by the force of the user's wrist. At the same time, were it not for the one-way bearing, any attempt by the user to subsequently separate the parts concerned by an unscrewing action might be prevented because a reverse screwing action to undo the two screw-threaded parts might result merely in rotation of the screw-threaded part of the device relative to the fixed part thereof, against the friction of the slipping clutch, indefinitely. This possibility is avoided by virtue of the one-way bearing which prevents the screw-threaded part of the attachment device rotating relative to the fixed part thereof in the reverse direction. As a result, an application by the user of an unscrewing force will unscrew the two screw-threaded parts.

Preferably, the frictional force is adjustable.

Advantageously, the slipping clutch member or at least one of the slipping clutch members is resilient, to provide a tolerance for wear.

Advantageously, the screw-threaded part of the attachment device is internally screw-threaded, so that it can receive a screw-threaded shank portion of such an article.

Advantageously, the fixed part and the screw-threaded part of the attachment device are coaxial cylindrical parts.

The inner of the two said parts of the attachment device may be provided with an extension which passes through an internal neck portion of the outer of the said two parts, with an annular abutment on the extension on that side of the neck portion further from that side thereof on which the inner part is located. The slipping clutch member or that one or those of the slipping clutch members which is/are resilient may then be provided between that annular abutment and the said neck of the outer of the said two parts of the attachment device.

The slipping clutch member or members may comprise one or more spring washers.

The annular part may comprise a nut having an internal screw-threading which engages an external screw-threading of the said extension. This enables the frictional force exerted by the slipping clutch member to be adjusted.

The one-way bearing may be provided between the said extension and the outer part of the attachment device. Locaters may be provided between the inner and the outer parts of the attachment device. This may be yieldable to further facilitate obtaining the desired frictional force.

An example of a combination constructed in accordance with the present invention is illustrated in greater detail in the accompanying drawings, in which:
- Figure 1: is an exploded view of parts of an attachment device which form part of a combination embodying the present invention;
- Figure 2: is a perspective side view of the parts of attachment device shown in Figure 1 in an assembled condition;
- Figure 3: is an axial sectional view of the attachment device of which parts are shown in Figures 1 and 2; and
- Figure 4: is a perspective side view of apparatus which embodies the present invention and which incorporates a plurality of attachment devices each as shown in Figures 1 to 3.

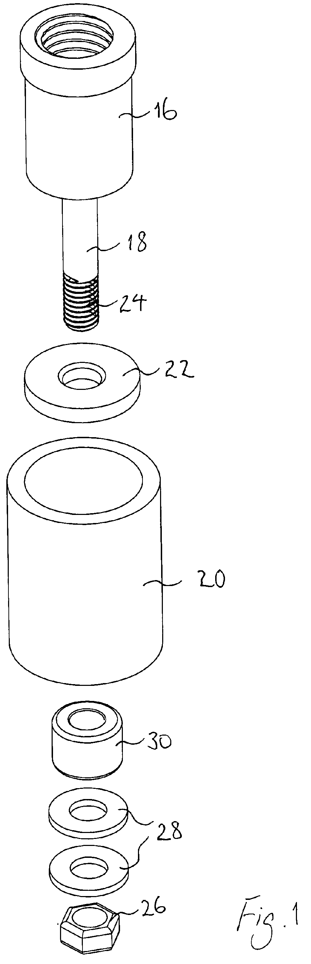

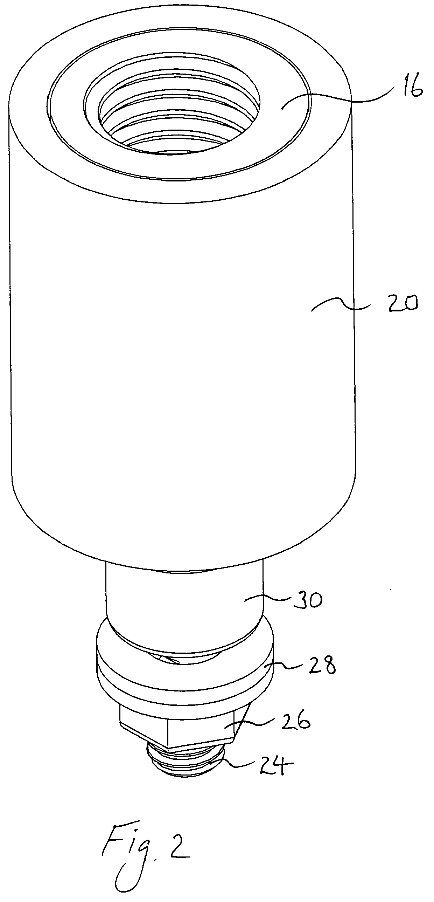

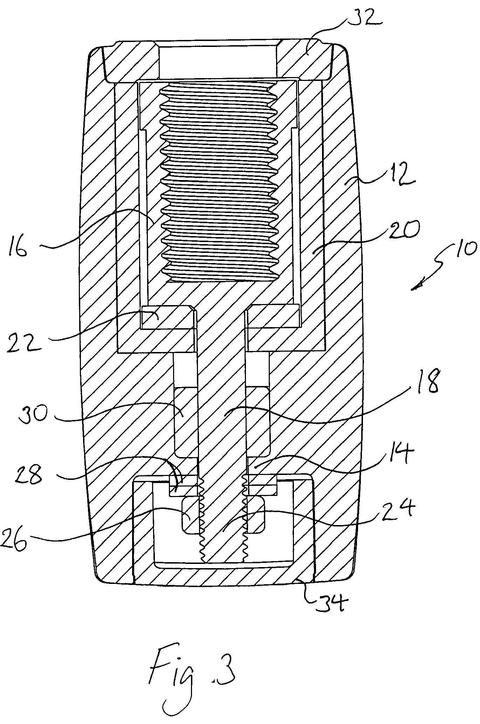

The attachment device 10 shown in Figures 1 to 3 comprises an outer generally cylindrical fixed part 12 which is generally hollow and which has an internal neck portion 14. The attachment device 10 further comprises an internally screw-threaded generally cylindrical inner part 16 which is rotatable relative to the fixed part 12 and which is coaxial with the outer part 12 and has an extension in the form of an axially extending shank portion 18 which extends through the neck portion 14 of the fixed part 12.

The screw-threaded part 16 is rotatably located within the fixed part 12 by means of locater lining 20 which is made of a slightly yieldable synthetic plastics material. A clutch plate 22 is sandwiched between the underside of the screw-threaded part 16 of the device and an annular portion of the lining 20. The clutch plate 22 provides appropriate or desirable coefficients of friction with other parts of the device.

The distal end 24 of the shank portion 18 which extends beyond the neck portion 14 is externally screw-threaded, and is engaged by an internally screw-threaded nut portion 26. Spring washers 28 are sandwiched between the nut 26 and the neck portion 14.

A one-way bearing 30 is positioned between the shank portion 18 and the fixed part 12 so that the screw-threaded part 16 can only rotate relative to the fixed part 12 in one rotational sense.

A rim portion 32 is provided fixed to the upper open end of the fixed part 12, and a removable closure cap 34 closes the lower open end of the fixed part 12.

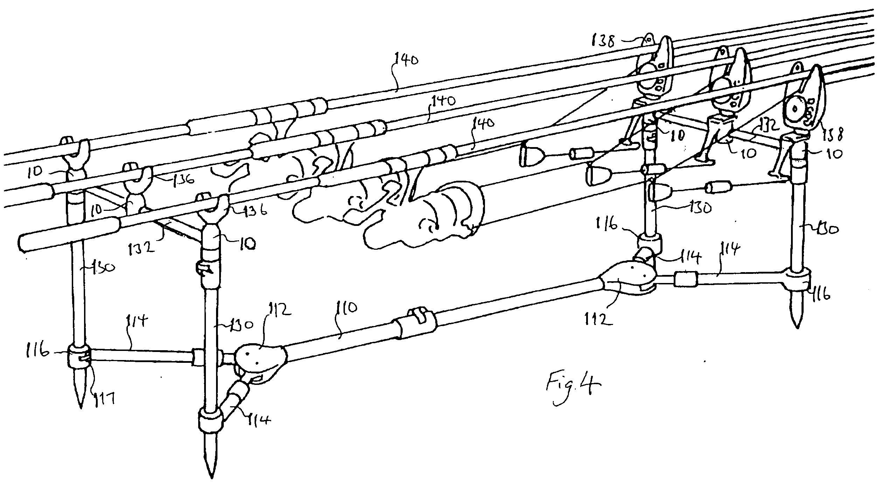

The apparatus shown in Figure 4 comprises an aluminium telescopically adjustable tubular elongate main part 110 provided with two hollow moulded synthetic plastics or pressure die cast aluminium pivot blocks 112 at its two ends respectively. Each block 112 is provided with a pair of arms 114 extending in a "V" outwardly therefrom and having respective ends pivotally retained by the pivot block 112. Both arms are also made of aluminium and are also telescopically adjustable in length, and each arm 114 has a tubular pole-retaining means 116 at its end further from the pivot block 112. The tubular retaining means 116 are mouldings and are orientated so that their axes are substantially parallel to one another and generally orthogonal to the arms 114 and the main elongate part 110. Each retaining means 116 has clamping means 117 to enable it to clamp in position a pole or bank-stick threaded through it. The clamping means 117 may be in the form of a thumbscrew device or a cam-action locking device, the latter being preferred for ease of adjustment and to reduce the likelihood of marking or damaging the pole or bank-stick.

Each tubular retaining means 116 is provided with an upright pole or bank-stick 130 which extends through and is held fast by the retaining means 116. Respective cross-bars or buzz bars 132 extend across and are secured to the upper ends of the pair of upright poles 130 respectively. Each cross-bar 132 is provided with three attachment devices 10, one at each end and one in the middle, fixedly attached to the cross-bar 132. The devices 10 at one end of the apparatus are provided with rod rests 136 and the devices 10 at the other end of the assembly are provided with fish-bite detectors 138. Three rods 140 can thereby be supported by the rod rests 136 and by detectors 138.

When the attachment device 10 is in use as shown in Figure 4, a pole rest 136 or a fish-bite detector 138 has its screw-threaded shank rotated into the screw-threaded part 16 of the device 10. Once the screw-threaded shank is secured fully home with a given tightening, such that the resistance to further tightening between the shank and the part 16 is greater than the frictional force which resists rotation between the parts 12 and 16, the screw-threaded part 16 rotates relative to the fixed part 12 against that frictional force. The latter is provided by the clutch plate 22. The frictional force is determined by the force exerted by the spring washers 28 which in turn is determined by the degree of tightening of the nut 26 on the screw-threaded end 24 of the screw-threaded part 16. In this respect, it will be appreciated that the frictional force is therefore adjustable. The adjustment can be achieved by removing the cap 34, tightening or slightly releasing the nut 26 on the screw-threaded end 24, and replacing the cap 34.

It will be appreciated therefore that this frictional force can be adjusted so that it is sufficient to hold the fish-bite detector in place on the buzz bar during use, but not so great as to prevent the user rotating the fish-bite detector in the tightening sense, for example in a clockwise sense, until the fish-bite detector is arranged to receive a rod 140 in a direction substantially perpendicular to the buzz bar 132. In this regard infinite adjustment is possible. At the same time, when the user wishes to remove the fish-bite detector 138 from the attachment device 10 by unscrewing the fish-bite detector 138 in an anticlockwise sense, the one-way bearing 30 prevents rotation of the screw-threaded part 16 of the attachment device 10 relative to the fixed part 12 so that an anticlockwise rotational force applied to the detector 138 sufficient to overcome the force with which the shank and part 16 were initially tightened, effects unscrewing of the shank portion from the screw-threaded part 16 of the attachment device 10, rather than merely rotating the screw-threaded part 16 relative to the fixed part 12 against the frictional force of the clutch plate 22.

Numerous variations and modifications may occur to the reader without taking the resulting construction outside the scope of the present invention. To give one example only, the part 16 instead of being hollow, may be provided with an externally screw-threaded shank projecting upwardly from the fixed part 12 to which is attached an internally screw-threaded part of an article when the device is in use. The spring washers 28 may comprise belleville washers, and may be replaced by or augmented by one or more helical compression springs or one or more elements of elastomeric material.

## Claims

1. A combination of a fish-bite detector (138) connected to a buzz bar (132) by way of an attachment device (10) which comprises a fixed part (12) and a screw-threaded part (16), **characterized in that** the screw-threaded part (16) can rotate relative to the fixed part (12) in a given sense against the frictional force exerted by at least one slipping clutch member (22 , 28) interposed between those parts (12, 16), the device (10) further being provided with a one-way bearing (30) which inhibits rotation of the screw-threaded part (16) relative to the fixed part (12) in the opposite sense.

2. A combination according to claim 1, **characterised in that** the frictional force is adjustable.

3. A combination according to claim 1 or claim 2, **characterised in that** the slipping clutch member (28) or at least one of the slipping clutch members (28) is resilient, to provide a tolerance for wear.

4. A combination according to any preceding claim, **characterised in that** the screw-threaded part (16) of the attachment device (10) is internally screw-threaded, so that it can receive a screw-threaded shank portion of an article to be attached.

5. A combination according to any preceding claim, **characterised in that** the fixed part (12) and the screw-threaded part (16) of the attachment device (10) are coaxial cylindrical parts.

6. A combination according to any preceding claim, **characterised in that** the slipping clutch member or members (22, 28) comprise one or more spring washers.

## Patentansprüche

1. Kombination eines Fischbissanzeigers (138), der mit einer Stange (132) über eine Befestigungsvorrichtung (10) verbunden ist, die ein ortsfestes Teil (12) und ein Schraubgewindeteil (16) umfasst, **dadurch gekennzeichnet, dass** das Schraubgewindeteil (16) relativ zum ortsfesten Teil (12) in einer vorgegebenen Richtung gegen die Reibungskraft drehbar ist, die von wenigstens einem zwischen diesen Teilen (12, 16) eingefügten Rutschkupplungselement (22, 28) ausgeübt wird, wobei die Vorrichtung (10) des Weiteren mit einem einseitigen Lager (30) versehen ist, das die Drehung des Schraubgewindeteils (16) relativ zum ortsfesten Teil (12) in Gegenrichtung verhindert.

2. Kombination nach Anspruch 1, **dadurch gekennzeichnet, dass** die Reibungskraft einstellbar ist.

3. Kombination nach Anspruch 1 oder Anspruch 2, **dadurch gekennzeichnet, dass** das Rutschkupplungselement (28) oder wenigstens eines der Rutschkupplungselemente (28) elastisch ist, um eine Verschleißtoleranz vorzusehen.

4. Kombination nach einem der vorstehenden Ansprüche, **dadurch gekennzeichnet, dass** das Schraubgewindeteil (16) der Befestigungsvorrichtung (10) ein Innenschraubgewinde aufweist, so dass es einen Schaftabschnitt mit Schraubgewinde eines zu befestigenden Gegenstands aufnehmen kann.

5. Kombination nach einem der vorstehenden Ansprüche, **dadurch gekennzeichnet, dass** es sich bei dem ortsfesten Teil (12) und dem Schraubgewindeteil (16) der Befestigungsvorrichtung (10) um koaxiale zylindrische Teile handelt.

6. Kombination nach einem der vorstehenden Ansprüche, **dadurch gekennzeichnet, dass** das Rutschkupplungselement oder die Rutschkupplungselemente (22, 28) eine oder mehrere Federscheiben umfassen.

## Revendications

1. Combinaison d'un détecteur de touche (138) pour la pêche connecté à un support de type « buzz bar » (132) au moyen d'un dispositif de fixation (10) qui comprend une partie fixe (12) et une partie filetée (16), **caractérisée en ce que** la partie filetée (16) peut tourner par rapport à la partie fixe (12) dans un sens donné à l'encontre de la force de frottement exercée par au moins un élément d'accouplement à friction (22, 28) intercalé entre ces parties (12, 16), le dispositif (10) étant en outre muni d'un roulement unidirectionnel (30) qui empêche la rotation de la partie filetée (16) par rapport à la partie fixe (12) dans le sens opposé.

2. Combinaison selon la revendication 1, **caractérisée en ce que** la force de frottement est réglable.

3. Combinaison selon la revendication 1 ou la revendication 2, **caractérisée en ce que** l'élément d'accouplement à friction (28) ou au moins l'un des éléments d'accouplement à friction (28) est élastique pour fournir une tolérance d'usure.

4. Combinaison selon l'une quelconque des revendications précédentes, **caractérisée en ce que** la partie filetée (16) du dispositif de fixation (10) présente un filetage interne, de manière à pouvoir recevoir une partie de tige filetée d'un article à fixer.

5. Combinaison selon l'une quelconque des revendications précédentes, **caractérisée en ce que** la partie fixe (12) et la partie filetée (16) du dispositif de fixation (10) sont des parties cylindriques coaxiales.

6. Combinaison selon l'une quelconque des revendications précédentes, **caractérisée en ce que** le ou les éléments d'accouplement par friction (22, 28) comprennent une ou plusieurs rondelles élastiques.
